# EUROPÄISCHE PATENTSCHRIFT

(11) **EP 2 896 082 B1**
(45) Veröffentlichungstag und Bekanntmachung des Hinweises auf die Patenterteilung: **07.03.2018**
(21) Anmeldenummer: 13762476.3
(22) Anmeldetag: 13.09.2013
(51) Int. Cl.: H01M 2/14, H01M 2/16, H01M 4/136, H01M 4/38, H01M 4/58, H01M 10/052, H01M 10/054, H01M 10/42, H01M 4/62, H01M 10/056

(54) **ALKALI-CHALKOGEN-BATTERIE MIT GERINGER SELBSTENTLADUNG UND HOHER ZYKLENFESTIGKEIT UND LEISTUNG**
ALKALI METAL-CHALCOGEN BATTERY HAVING LOW SELF-DISCHARGE AND HIGH CYCLE LIFE AND POWER
BATTERIE ALCALINE-CHALCOGÈNE À FAIBLE AUTODÉCHARGE ET À TENUE AU CYCLAGE ET PUISSANCE ÉLEVÉES

(30) Priorität: 14.09.2012 DE 102012018621
(43) Veröffentlichungstag der Anmeldung: 22.07.2015
(73) Patentinhaber: FRAUNHOFER-GESELLSCHAFT zur Förderung der angewandten Forschung e.V., 80636 München (DE); Technische Universität Dresden, 01069 Dresden (DE)
(72) Erfinder: THIEME, Sören, 01324 Dresden (DE); BRÜCKNER, Jan, 01307 Dresden (DE); BAUER, Ingolf, 01445 Radebeul (DE); ALTHUES, Holger, 01309 Dresden (DE); KASKEL, Stefan, 01159 Dresden (DE)
(74) Vertreter: Pfenning, Meinig & Partner mbB
(86) Internationale Anmeldenummer: PCT/EP2013/068979
(87) Internationale Veröffentlichungsnummer: WO 2014/041110

(56) Entgegenhaltungen:
- WO-A1-2013/109810
- DE-A1-102010 018 731
- DE-A1-102010 030 887
- DE-A1-102011 120 959
- JP-A- 2008 152 985
- US-A- 3 806 369
- US-A- 6 153 337
- ZHAOQING JIN ET AL: "Application of lithiated Nafion ionomer film as functional separator for lithium sulfur cells", JOURNAL OF POWER SOURCES, Bd. 218, 7. Juli 2012 (2012-07-07), Seiten 163-167, XP055085254, ISSN: 0378-7753, DOI: 10.1016/j.jpowsour.2012.06.100

## Beschreibung

Die Erfindung bezieht sich auf eine Alkali-Chalkogen-Batterie (nachfolgend: Batterie), insbesondere eine Lithium-Schwefel-Batterie, welche eine hohe Kapazität und Zyklenfestigkeit und verringerte Selbstentladung aufweist. Die Batterie weist gegenüber dem Stand der Technik verbesserte Leistungswerte auf. Dies wird durch einen ionenselektiven Separator zwischen Kathode und Anode erreicht, welcher für Alkalimetallionen permeabel, aber für Polychalkogenidionen, wie z.B. Polysulfidionen impermeabel ist. Somit wird zum Einen die Wanderung von Polysulfidionen von der Kathode zur Anode blockiert und dadurch die Bildung von dendritischen Strukturen an der Anode verhindert. Hierdurch wird in effektiver Weise die Selbstentladung von Li-S-Batterien verhindert und eine hohe Kapazität und Zyklenfestigkeit erreicht. Zum Anderen kann der ionenselektive Separator äußerst dünn ausgeführt sein, so dass dadurch eine deutliche Leistungssteigerung erzielt werden kann.

In Lithium-Schwefel-Batterien kommt es zur Bildung von sogenannten Lithium-Polysulfiden (Li₂Sₙ, 2 ≤ n ≤ 8). Einige dieser Polysulfidspezies sind in den gebräuchlichen Elektrolyten (z. B. ein Gemisch aus DME:DOL mit einem Leitsalz) löslich. Die gelösten Polysulfide können den Separator durchdringen und werden an der Anode zu niederen Polysulfidspezies reduziert.

Während des Ladevorgangs folgt der Reduktion eine Reoxidation an der Kathode, wodurch ein Kreislaufprozess entsteht, der die Coulomb-Effizienz des Akkumulators erheblich verringert (Jayaprakash, N. et al., Ang. Chem. Int. Ed., 50:5904-5908, 2011). Wird die Batterie im geladenen Zustand gelagert, kann es ebenfalls zur Bildung von löslichen Polysulfiden kommen, die an der Anode reduziert werden. Dadurch verringert sich die Kapazität der Zelle. Weiterhin verringert sich die Zyklenfestigkeit durch mit diesen Vorgängen verbundenen irreversiblen Prozessen.

In der Literatur und Patentschriften ist bekannt, dass der Zusatz von N-O-haltigen Verbindungen (wie z. B. LiNO₃) zu einer wesentlich verbesserten Coulomb-Effizienz und Zyklenfestigkeit führt (US 7,354,680; Aurbach, D. et al., J. Electrochem. Soc., 156:A694-A702, 2009).

Der Mechanismus setzt an der Lithium-Anode an. Es wird angenommen, dass es durch die Nitratverbindungen zur Bildung von sulfitischen Spezies an der Oberfläche der Lithium-Anode kommt. Der Zusatz von LiNO₃ oder anderen N-O-haltigen Verbindungen löst das Problem jedoch aus folgenden Gründen nicht umfassend:
▪ Die Degradation der Anode wird nicht vollständig verhindert, was die Zyklenfestigkeit der Zelle negativ beeinflusst;
▪ Der Zusatz von LiNO₃ hat Einfluss auf die Zellchemie und führt möglicherweise zu unbekannten bzw. unerwünschten Nebenreaktionen;
▪ LiNO₃ erhöht das Gewicht des Elektrolyten.

Polyethylenoxid-basierte Polymerelektrolyte wurden bereits erfolgreich als Kathodenzusatz oder als Membran in Li-Schwefel-Batterien getestet (Scrosati, F. et al., J. Power Sources, 161:560-564, 2006; Nazar, L. et al., J. Mat. Chem., 20:9821-9826, 2010).

Die Verwendung eines anionischen Polymers als Kathodenbestandteil zur Verbesserung der Zyklenfestigkeit von Li-Schwefel-Zellen ist in der Patentliteratur beschrieben (US 2012/ 088154). Da hierbei die Graphen-Schwefel-Nanocompositen der Kathode eine sehr große Oberfläche haben, sind relativ hohe Mengen an Nafion® nötig, um das gesamte Graphen-Schwefel-Nanocomposit mit Nafion® zu beschichten oder zu benetzen. Da Nafion® eine schlecht leitende Komponente ist, wird durch den hohen Nafion®-Anteil der Kathode die maximale Leistungsentnahme der Li-S-Batterie deutlich reduziert.

Die US 6 153 337 A offenbart Separatoren für elektrochemische Zellen und elektrochemische Zellen enthaltend diese Separatoren, wobei die Separatoren als Separatorsubstrat eine mikroporöse Pseudo-Böhmit-Schicht aufweisen.

Die JP 2008 152985 A offenbart eine Lithiumionen-Batterie, die eine hohe elektrische Leistung aufweist.

Die DE 10 2011120 959 A1 offenbart ein Metall-Schwefel-Batteriesystem, das einen geringen Kapazitätsverlust beim Ladevorgang aufweist.

Ausgehend hiervon war es Aufgabe der vorliegenden Erfindung, eine Alkali-Chalkogen-Batterie bereitzustellen, welche keine Selbstentladung und eine hohe Zyklenstabilität liefern kann.

Die Aufgabe wird gelöst durch die Li-S-Batterie gemäß Anspruch 1. Die abhängigen Ansprüche zeigen vorteilhafte Ausführungsformen auf.

Der vorgeschlagene Lösungsweg stellt - bei minimaler Fläche des Separators - eine undurchlässige Barriere für Polysulfide dar und kann somit den direkten Kontakt von Polysulfiden mit der Lithium Anode weitgehend verhindern.

Das anionische Polymer Nafion® ist aus anderen Anwendungen wie Brennstoffzellen oder der Chlor-Alkali-Elektrolyse als kationenselektive Membran bekannt. Aufgrund dieser Eigenschaft von Nafion® wird vorgeschlagen, einen Separator enthaltend oder bestehend aus einem anionischen, kationenselektiven Polymer (wie z. B. Nafion®) als Separator in einer Li-S-Batterie einzusetzen.

Erfindungsgemäß wird somit eine Alkali-Chalkogen-Batterie, insbesondere eine Li-S-Batterie bereitgestellt, welche
a) eine Kathode enthaltend zumindest ein Chalkogen, z. B. Schwefel und/oder mindestens eine Alkali-Chalkogen-Verbindung, wie z. B. eine Lithium- oder Natrium-Schwefel-Spezies;
b) eine Anode; und
c) einen zwischen Anode und Kathode angeordneten Alkalimetall-haltigen, z. B. Lithium- oder Natrium-haltigen Flüssigelektrolyten, Gelelektrolyten und/oder Festelektrolyten;
umfasst.

Die Batterie ist dadurch gekennzeichnet, dass zwischen Anode und Kathode ein kationenselektiver Separator angeordnet ist, welcher für Alkalimetallkationen, insbesondere Lithium- oder Natriumionen permeabel und für Polychalkogenidionen (Zₙ²⁻ mit n≥ 2, wobei Z das Chalkogen, z.B. Schwefel darstellt), impermeabel ist. Der Kationenselektive Separator weist eine Schichtdicke von 50 nm bis 5 µm auf. Ferner ist die Batterie dadurch gekennzeichnet, dass der kationenselektive Separator zwischen Anode und Kathode ein poröses Substrat enthält, wobei das poröse Substrat Poren mit einem gemittelten Porendurchmesser d₅₀ von 1 nm bis 5 µm aufweist und die Poren des porösen Substrats teilweise oder vollständig mit einem anionischen Polymer imprägniert sind, und wobei das poröse Substrat aus einem porösen thermoplastischen Material besteht.

Es wurde beobachtet, dass mit der erfindungsgemäßen Batterie der beispielsweise bei Li-S-Batterien aus dem Stand der Technik beobachtete Polysulfid-Shuttlemechanismus unterdrückt werden kann.

Die Unterbindung der Polysulfiddiffusion zur (Lithium-)Anode verhindert potentiell irreversible Zersetzungsprozesse an der Anode und führt dadurch zu einer verbesserten Zyklenfestigkeit. Ferner kann die Selbstentladung von Lithium-Schwefel-Zellen, im Gegensatz zum Zusatz vonLiNO₃, über längere Zeiträume (> 60 Tage) verhindert werden und somit wird die volle Kapazität der Li-S-Batterie über einen längeren Zeitraum erhalten.

Der entscheidende Vorteil eines äußerst dünnen kationenselektiven Separators bewirkt, dass die Ionenleitfähigkeit zwischen der Anode und/oder Kathode nicht durch eine große Dicke an - auf der Anode und/oder Kathode aufgebrachter - schlechtleitender kationenselektiver Membran reduziert wird. Folglich sind hohe Entladungsströme möglich und die Li-S-Batterie kann hohe Leistungswerte liefern.

In einer bevorzugten Ausgestaltungsform trennt der Separator den Elektrolyten räumlich vollständig in einen anodenseitigen Teil des Elektrolyten und einen kathodenseitigen Teil des Elektrolyten, wobei sich beide Teile des Elektrolyten nur über den Separator kontaktieren.

In einer erfindungsgemäßen Li-S-Batterie ist der kationenselektive Separator zwischen Anode und Kathode dadurch gekennzeichnet, dass er ein anionisches Polymer, bevorzugt ein anionisches Tetrafluorethylen-Perfluor-Copolymer, besonders bevorzugt ein Sulfonsäuregruppen-haltiges Tetrafluorethylen-Perfluor-Copolymer, insbesondere ein Tetrafluorethylen/Perfluor(4-methyl-3,6-Dioxa-7-oktan-1-sulfonsäure)-Copolymer (Nafion®, CAS-Nr.: 31175-20-9) enthält oder daraus besteht. Es hat sich gezeigt, dass derartige Separatoren trotz der geringen Schichtdicke eine äußerst hohe chemische Stabilität aufweisen, die zur Langzeitstabilität der Batterie beiträgt.

Der kationenselektive Separator zwischen Anode und Kathode weist eine Schichtdicke von 50 nm bis 5 µm, bevorzugt 100 nm bis 5 µm, besonders bevorzugt 200 nm bis 5 µm, auf.

Der kationenselektive Separator kann planar ausgestaltet sein, bevorzugt als planare Membran.

Die Batterie selbst kann dabei ebenso planar aufgebaut sein, jedoch auch als aufgewickelte Batterie vorliegen.

Der erfindungsgemäße kationenselektive Separator zwischen Anode und Kathode enthält ein poröses, bevorzugt flächiges, Substrat, welches Poren mit einem gemittelten Porendurchmesser d₅₀ von 1 nm bis 5 µm, bevorzugt 5 nm bis 500 nm, besonders bevorzugt 10 nm bis 200 nm, insbesondere 20 bis 100 nm, aufweist. Hierbei sind die Poren des Substrats teilweise oder vollständig mit einem anionischen Polymer, bevorzugt mit einem anionischen Tetrafluorethylen-Perfluor-Copolymer, besonders bevorzugt mit einem Sulfonsäuregruppen-haltigen Tetrafluorethylen-Perfluor-Copolymer, insbesondere mit einem Tetrafluorethylen/Perfluor(4-methyl-3,6-Dioxa-7-oktan-1-sulfonsäure)-Copolymer (Nafion®, CAS-Nr.: 31175-20-9) imprägniert.

Das Substrat enthält erfindungsgemäß ein poröses thermoplastisches Material, bevorzugt ein Polyolefin, besonders bevorzugt ein Polypropylen, Polyethylen, Polyethylenterephtalat, sowie Verbundmaterialien hieraus, oder besteht daraus. Als nicht erfindungsgemäßes Substrat wirdCelgard® 2500 offenbart, eine poröse PP-Folie mit einer Dicke von 25 µm und einem gemittelten Porendurchmesser von 0,064 µm. Der durchschnittliche Grad der Porosität dieser Substratmaterialien kann zwischen 30 und 70% liegen, z. B. 55% betragen.

In einer bevorzugten Ausgestaltungsform der Batterie kann die Kathode ein elektrisch leitfähiges Kohlenstoffmaterial enthalten.

Eine Kathode, wie sie in der erfindungsgemäßen Li-S-Batterie enthalten sein kann, ist z.B. aus der DE 10 2012 203 019.0 bekannt. Bezüglich möglicher Ausgestaltungen der Kathode sowie möglicher Herstellungsverfahren wird auf diese Patentanmeldung verwiesen, deren Offenbarungsgehalt insofern auch zum Gegenstand der vorliegenden Anmeldung gemacht wird.

Möglich ist ferner, dass die Kathode, bezogen auf das Gesamtgewicht der Kathode,
a) 40-90 Gew.-%, bevorzugt 50-80 Gew.-%, besonders bevorzugt 60-75 Gew.-% Schwefel;
b) 1-55 Gew.-%, bevorzugt 5-35 Gew.-%, besonders bevorzugt 10-25 Gew.-%, elektrisch leitfähiges Kohlenstoffmaterial; und/oder
c) 2-50 Gew.-%, bevorzugt 3-20 Gew.-%, besonders bevorzugt 5-10 Gew.-%, Kunststoff;
enthält.

Die Kathode kann zudem
a) Schwefel, elektrisch kontaktierten Schwefel und/oder eine Lithium- oder Natrium-Schwefel-Spezies, insbesondere Li₂S;
b) als elektrisch leitfähiges Kohlenstoffmaterial porösen Kohlenstoff, Ruß, Graphen, Graphit, Diamond Like Carbon (DLC), Graphite Like Carbon (GLC) Kohlenstofffasern, Kohlenstoffnanoröhren und/oder Kohlenstoffhohlkugeln, und/oder
c) Kunststoff, bevorzugt fibrillären Kunststoff, besonders bevorzugt fibrilläres Polytetrafluorethylen;
enthalten.

In einer bevorzugten Ausgestaltungsform weisen
a) die Kohlenstoffnanoröhren einen Durchmesser von 0,1 bis 100 nm, bevorzugt von 1 bis 50 nm, besonders bevorzugt von 5 bis 25 nm; und/oder
b) die Kohlenstofffasern einen Durchmesser von 1 bis 100 µm, bevorzugt von 5 bis 50 µm, besonders bevorzugt von 10 bis 20 µm; auf.

In einer weiteren Ausgestaltungsform der erfindungsgemäßen Li-S-Batterie kann die Kathode als Folie, bevorzugt mit einer Dicke von 20-1000 µm, besonders bevorzugt mit einer Dicke von 50-500 µm, insbesondere mit einer Dicke von 80-300 µm, ausgestaltet. Optional ist sie auf ein elektrisch leitfähiges Substrat, bevorzugt auf ein Metall und/oder Kohlenstoffmaterial, aufgebracht.

Bevorzugt ist das elektrochemisch aktive Kathodenmaterial zumindest bereichsweise auf die Oberfläche des elektrisch leitfähigen Kohlenstoffmaterials aufgebracht oder das elektrisch leitfähige Kohlenstoffmaterial auf die Oberfläche des aktiven Kathodenmaterials aufgebracht.

Die Anode kann ein Alkalimetall, wie z. B. Li oder Na enthalten oder hieraus gebildet sein. Zudem kann die Anoden Si oder Sn oder Legierungen hieraus enthalten oder daraus gebildet sein. Ebenso ist es möglich, dass die Anode ein leitfähiges Substrat umfasst.

Das leitende Substrat der Anode kann ein Material ausgewählt aus der Gruppe bestehend aus Lithium, Kohlenstoff, Graphit, Graphen, Diamond Like Carbon (DLC), Graphite Like Carbon (GLC), Ruß und Kohlenstoffnanoröhren enthalten oder daraus bestehen.

Die Anode kann ferner Silicium und/oder Zinn in einer Gesamtmenge, bezogen auf die Gesamtmasse der Anode, von 0,1 bis 90 Gew.-%, bevorzugt von 20 bis 80 Gew.-%, besonders bevorzugt von 40 bis 70 Gew.-% enthalten.

In einer bevorzugten Ausgestaltungsform ist das leitende Substrat der Anode mit Silizium und/oder Zinn beschichtet oder mit einem Alkalimetall, z. B. mit Na oder mit Lithium, insbesondere Lithiummetall, besonders bevorzugt Lithiummetallfolie, lithiiert, wobei die Beschichtung bevorzugt eine konforme Beschichtung ist, insbesondere eine PVD- und/oder CVD-Beschichtung, besonders bevorzugt eine PE-CVD-Beschichtung ist.

Der Elektrolyt der erfindungsgemäßen Li-S-Batterie kann ausgewählt sein aus der Gruppe bestehend aus Lösungen oder Suspensionen von mindestens einem Lithiumsalz in mindestens einem cyclischen oder nichtcyclischen Ether, Polyether und/oder Sulfon, bevorzugt Lösungen von
a) Lithium-bis(trifluormethansulfonyl)imid (LiTFSI);
b) Lithiumtrifluormethansulfonat;
c) Lithiumnitrat; und/oder
d) mindestens einem Lithiumsalz und mindestens einem N-O-haltigen Additiv;
in mindestens einem cyclischen oder nichtcyclischen Ether, Polyether und/oder Sulfon, insbesondere in Dimethoxyethan (DME), Tetraethylglycoldimethylether (TEGDME) und/oder 1,3-Dioxolan (DOL).

Ein anionisches Polymer, bevorzugt ein anionisches Tetrafluorethylen-Perfluor-Copolymer, besonders bevorzugt ein Sulfonsäuregruppen-haltiges Tetrafluorethylen-Perfluor-Copolymer, insbesondere ein Tetrafluorethylen/Perfluor(4-methyl-3,6-Dioxa-7-oktan-1-sulfonsäure)-Copolymer (Nafion®, CAS-Nr.: 31175-20-9) kann als Imprägniermittel für Separatoren in Lithium-Schwefel-Batterien verwendet werden.

Anhand der nachfolgenden Figuren und Beispiele soll der erfindungsgemäße Gegenstand näher erläutert werden, ohne diesen auf die hier dargestellten spezifischen Ausführungsformen einschränken zu wollen.

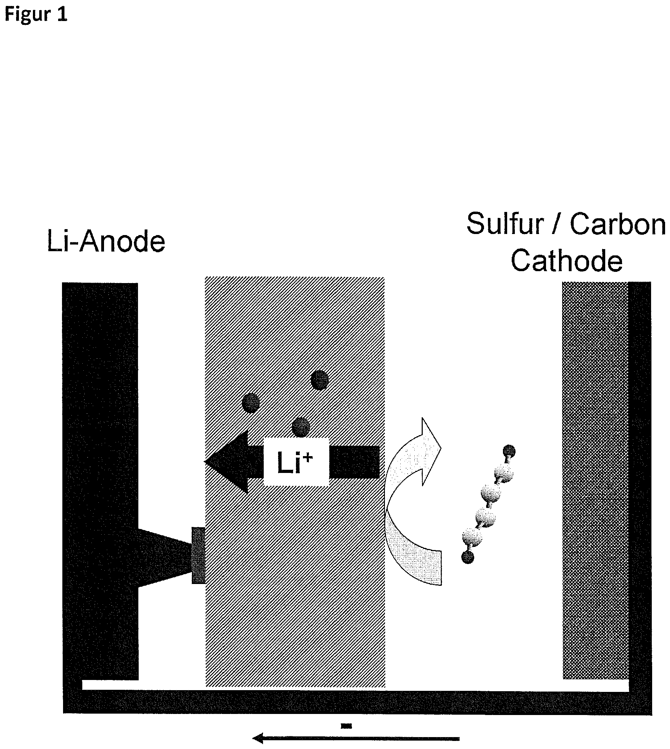

Figur 1 illustriert die Wirkungsweise einer erfindungsgemäßen Li-S-Batterie, welche zwischen Anode und Kathode einen kationenselektiven Separator angeordnet hat, welche für Lithiumionen permeabel und für Polysulfidionen impermeabel ist. Der Separator als Barriere bewirkt, dass die Polysulfide nicht an der Anode reagieren können. Dadurch werden Verluste in der Effizienz und Degradationsmechanismen eingeschränkt. Ferner wirkt hier der Separator auch als mechanische Barriere, welche das Wachstum von Dendriten unterbindet.

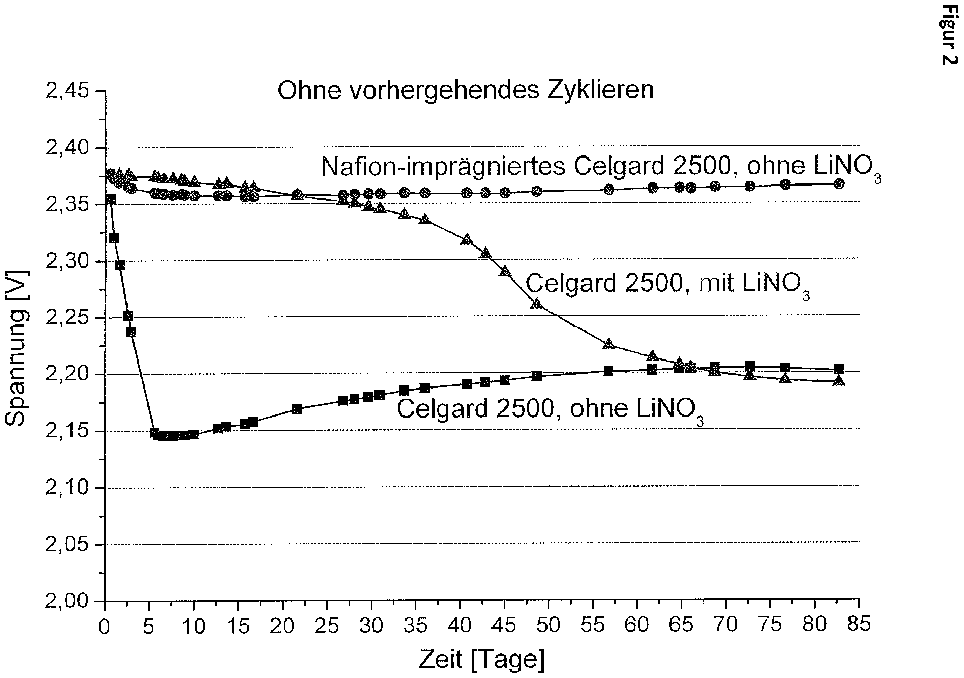

Figur 2 zeigt das Ergebnis der Messung der Klemmspannung einer Li-S-Batterie mit Nafion-imprägniertem Celgard 2500 ("Nafion-imprägniertes Celgard 2500") verglichen mit zwei Li-S-Batterien ("Celgard 2500 mit LiNO₃" und "Celgard 2500 ohne LiNO₃"), die als Referenz dazu dienen. Die Li-S-Batterie mit Nafion-imprägniertem Celgard 2500 ("Nafion-imprägniertes Celgard 2500") weist hierbei einen Separator aus Celgard 2500 auf, der mittels der unter "Beispiel 2" angegebenen Verfahrensweise mit Nafion® imprägniert wurde. Auf den aus dem Stand der Technik bekannten Elektrolytzusatz LiNO₃ zur Verbesserung der elektrochemischen Eigenschaften konnte aufgrund der Nafion®-Imprägnierung verzichtet werden. Bei den anderen Li-S-Batterien ("Celgard 2500 mit LiNO₃" und "Celgard 2500 ohne LiNO₃") wurde der in der Literatur und Technik bekannte Separator Celgard 2500® ohne weitergehende Behandlung verwendet. Eine Batterie ("Celgard 2500 mit LiNO₃") enthielt zur Verbesserung der elektrochemischen Eigenschaften 0,25 mol/I LiNO₃ als Elektrolytzusatz. Der Elektrolyt einer weiteren Batterie ("Celgard 2500 ohne Li-NO₃") wurde nicht mit LiNO₃ versetzt und diente als Vergleichsbatterie. Im Gegensatz zu den Batterien aus dem Stand der Technik weist die Li-S-Batterie mit Nafion-imprägniertem Celgard 2500 auch nach 85 Tagen keinen Verlust an Klemmspannung auf d. h. es tritt keine Selbstentladung der Batterie auf.

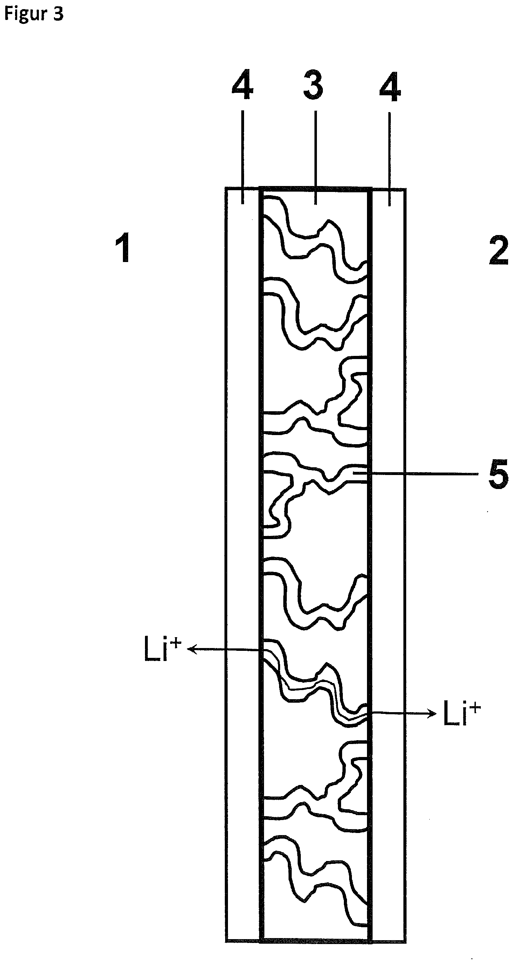

Figur 3 zeigt eine allgemeine Ausführungsform des kationenselektiven Separators. Figur 3 zeigt die Anordnung des Separators zwischen der Anode 1 und der Kathode 2. Die Poren 5 der porösen Polymermembran 3 sind hierbei teilweise oder vollständig mit einem Sulfonsäuregruppen-haltigen Tetrafluorethylen-Perfluor-Copolymer gefüllt. Optional befindet sich auf einer oder beiden Seiten der porösen Polymermembran eine Beschichtung aus einem Sulfonsäuregruppen-haltigen Tetrafluorethylen-Perfluor-Copolymer 4.

### Beispiel 1- Naflon®- Membran als Separator

Eine Nafion®-Membran NR211 (25 µm Dicke) wird als Separator in einer elektrochemischen Zelle verwendet. Die Verarbeitung der Membran kann analog zur der Verarbeitung herkömmlicher poröser Polymermembran erfolgen.

Gegebenenfalls kann die Nafion®-Membran über einige Stunden in einer Elektrolytlösung eingelegt werden, bevor die mit Elektrolyt getränkte Membran als Separatormembran in einer elektrochemischen Li-S-Zelle verwendet wird.

### Beispiel 2 - Mit Nafion®-imprägniertes poröses Substrat als Separator

Nach dem folgenden Beispiel kann ein poröses Substrat mit einem anionischen Polymer imprägniert werden:
1. 20 Gew.-% Nafion®-Lösung für einige Stunden bei 80°C im Umluft-Trockenschrank eindampfen;
2. Aus dem Rückstand durch Zusatz von Ethanol eine 10 Gew.-% Nafion®-Lösung herstellen;
3. Das poröse Substrat Celgard® 2500 für 1 h in die oben genannte Nafion®-Lösung einlegen;
4. Trocknung des Substrats bei 55°C für 1 h im Umluft-Trockenschrank.

Das gemäß diesem Verfahren imprägnierte poröse Substrat (mit Nafion® imprägniertes Celgard® 2500) kann als Separator in einer Li-S-Batterie verwendet werden.

## Patentansprüche

1. Alkali-Chalkogen-Batterie umfassend
a) eine Kathode enthaltend zumindest ein Chalkogen und/oder mindestens eine Alkali-Chalkogen-Verbindung;
b) eine Anode;
c) einen zwischen Anode und Kathode angeordneten Alkalimetall-haltigen Flüssigelektrolyten, Gelelektrolyten und/oder Festelektrolyten;
wobei zumindest bereichsweise zwischen Anode und Kathode ein kationenselektiver Separator angeordnet ist, welcher für Alkalimetallionen permeabel und für Polychalkogenidionen Zₙ²⁻ mit n ≥ 2, wobei Z das Chalkogen darstellt impermeabel ist, wobei der kationenselektive Separator zwischen Anode und Kathode ein poröses Substrat enthält, wobei das poröse Substrat Poren mit einem gemittelten Porendurchmesser d₅₀ von 1 nm bis 5 µm aufweist und die Poren des porösen Substrats teilweise oder vollständig mit einem anionischen Polymer imprägniert sind, und wobei das poröse Substrat aus einem porösen thermoplastischen Material besteht, **dadurch gekennzeichnet, dass** der kationenselektive Separator eine Schichtdicke von 50 nm bis 5 µm aufweist.

2. Batterie gemäß Anspruch 1, **dadurch gekennzeichnet, dass** der Separator den Elektrolyten räumlich vollständig in einen anodenseitigen Teil des Elektrolyten und einen kathodenseitigen Teil des Elektrolyten trennt, wobei sich beide Teile des Elektrolyten nur über den Separator kontaktieren.

3. Batterie gemäß einem der vorhergehenden Ansprüche, **dadurch gekennzeichnet, dass** der kationenselektive Separator planar ausgestaltet ist, bevorzugt als planare Membran.

4. Batterie gemäß einem der vorhergehenden Ansprüche, **dadurch gekennzeichnet, dass** der kationenselektive Separator zwischen Anode und Kathode ein poröses und flächiges, Substrat enthält, welches Poren mit einem gemittelten Porendurchmesser d₅₀ von 5 nm bis 500 nm, besonders bevorzugt 10 nm bis 200 nm, insbesondere 20 bis 100 nm, aufweist, wobei die Poren des Substrats teilweise oder vollständig mit einem anionischen Tetrafluorethylen-Perfluor-Copolymer, besonders bevorzugt mit einem Sulfonsäuregruppen-haltigen Tetrafluorethylen-Perfluor-Copolymer, insbesondere mit einem Tetrafluorethylen/Perfluor(4-methyl-3,6-Dioxa-7-oktan-1-sulfonsäure)-Copolymer imprägniert sind.

5. Batterie gemäß dem vorhergehenden Anspruch, **dadurch gekennzeichnet, dass** das Substrat ein Polyolefin, besonders bevorzugt ein Polypropylen, Polyethylen, Polyethylenterephtalat, sowie Verbundmaterialien hieraus, enthält oder daraus besteht.

6. Batterie gemäß einem der vorhergehenden Ansprüche, **dadurch gekennzeichnet, dass** die Kathode, bezogen auf das Gesamtgewicht der Kathode,
a) 40-90 Gew.-%, bevorzugt 50-80 Gew.-%, besonders bevorzugt 60-75 Gew.-% elektrochemisch aktives Kathodenmaterial;
b) 1-55 Gew.-%, bevorzugt 5-35 Gew.-%, besonders bevorzugt 10-25 Gew.-%, elektrisch leitfähiges Kohlenstoffmaterial; und/oder
c) 0,5-30 Gew.-%, bevorzugt 1-10 Gew.-%, besonders bevorzugt 2-5 Gew.-%, Kunststoff;
enthält.

7. Batterie gemäß einem der vorhergehenden Ansprüche, **dadurch gekennzeichnet, dass** die Kathode
a) ein elektrochemisch aktives Kathodenmaterial enthaltend Schwefel oder eine Lithium-Schwefel-Verbindung, bevorzugt Li₂S;
b) als elektrisch leitfähigen Kohlenstoffmaterial porösen Kohlenstoff, Ruß, Graphen, Graphit, Diamond Like Carbon (DLC), Graphite-Like-Carbon (GLC), Kohlenstofffasern, Kohlenstoffnanoröhren und/oder Kohlenstoffhohlkugeln, und/oder
c) als fibrillären Kunststoff fibrilläres Polytetrafluorethylen;
enthält.

8. Batterie gemäß dem vorhergehenden Anspruch, **dadurch gekennzeichnet, dass**
a) die Kohlenstoffnanoröhren einen Durchmesser 0,1 bis 100 nm, bevorzugt von 1 bis 50 nm, besonders bevorzugt von 5 bis 25 nm aufweisen; und/oder
b) die Kohlenstofffasern einen Durchmesser von 1 bis 100 µm, bevorzugt von 5 bis 50 µm, besonders bevorzugt von 10 bis 20 µm;
aufweisen.

9. Batterie gemäß einem der vorhergehenden Ansprüche, **dadurch gekennzeichnet, dass** die Kathode als Folie, bevorzugt mit einer Dicke von 20-1000 µm, besonders bevorzugt mit einer Dicke von 50-500 µm, insbesondere mit einer Dicke von 80-300 µm, ausgestaltet ist und optional auf ein elektrisch leitfähiges Substrat, bevorzugt auf ein Metall und/oder Kohlenstoffmaterial, aufgebracht ist.

10. Batterie gemäß einem der Ansprüche 7 bis 9, **dadurch gekennzeichnet, dass** das elektrochemisch aktive Kathodenmaterial zumindest bereichsweise auf die Oberfläche des elektrisch leitfähigen Kohlenstoffmaterials aufgebracht ist oder das elektrisch leitfähige Kohlenstoffmaterial auf die Oberfläche des aktiven Kathodenmaterials aufgebracht ist.

11. Batterie gemäß einem der vorhergehenden Ansprüche, **dadurch gekennzeichnet, dass** der Elektrolyt ausgewählt ist aus der Gruppe bestehend aus Lösungen oder Suspensionen von mindestens einem Lithiumsalz in mindestens einem cyclischen oder nichtcyclischen Ether, Polyether und/oder Sulfon, bevorzugt Lösungen von
a) Lithium-bis(trifluormethansulfonyl)imid (LiTFSI);
b) Lithiumtrifluormethansulfonat;
c) Lithiumnitrat; und/oder
d) mindestens einem Lithiumsalz und mindestens einem N-O-haltigen Additiv;
in mindestens einem cyclischen oder nichtcyclischen Ether, Polyether und/oder Sulfon, insbesondere in Dimethoxyethan (DME), Tetraethylenglykoldimethylether (=TEGDME) und/oder 1,3-Dioxolan (DOL).

## Claims

1. Alkali-chalcogen battery comprising
a) a cathode comprising at least one chalcogen and/or at least one alkali-chalcogen compound;
b) an anode;
c) an alkali metal-containing liquid electrolyte, gel electrolyte and/or solid electrolyte disposed between anode and cathode;
wherein a cation-selective separator is disposed at least in regions between anode and cathode, which separator is permeable for alkali metal ions and impermeable for polychalcogenide ions Zₙ²⁻ with n ≥ 2, Z representing the chalcogen, wherein the cation-selective separator between anode and cathode comprises a porous substrate, wherein the porous substrate has pores with an average pore diameter d₅₀ of 1 nm to 5 µm and the pores of the substrate are impregnated partially or completely with an anionic polymer, and wherein the porous substrate consists of a porous thermoplastic material, **characterized in that** that the cationic separator has a layer thickness of 50 nm to 5 µm.

2. Battery according to claim 1, **characterised in that** the separator separates the electrolyte completely spatially into an anode-side part of the electrolyte and a cathode-side part of the electrolyte, both parts of the electrolyte being contacted only via the separator.

3. Battery according to one of the preceding claims, **characterised in that** the cation-selective separator has a planar configuration, preferably as a planar membrane.

4. Battery according to one of the preceding claims, **characterised in that** the cation-selective separator between anode and cathode comprises a porous and planar substrate which has pores with an average pore diameter d₅₀ of 5 nm to 500 nm, particularly preferred 10 nm to 200 nm, in particular 20 to 100 nm, the pores of the substrate being hereby impregnated partially or completely with an anionic tetrafluoroethylene-perfluoro copolymer, particularly preferred with a sulphonic acid group-containing tetrafluoroethylene-perfluoro copolymer, in particular with a tetrafluoroethylene/perfluoro(4-methyl-3,6-dioxa-7-octane-1-sulphonic acid) copolymer.

5. Battery according to the preceding claim, **characterised in that** the substrate comprises a polyolefin, particularly preferred a polypropylene, polyethylene, polyethylene terephthalate, and also composite materials hereof, or consists thereof.

6. Battery according to one of the preceding claims, **characterised in that** the cathode, relative to the total weight of the cathode, comprises
a) 40 - 90% by weight, preferably 50 - 80% by weight, particularly preferred 60 - 75% by weight, of electrochemically active cathode material;
b) 1 - 55% by weight, preferably 5 - 35% by weight, particularly preferred 10 - 25% by weight, of electrically conductive carbon material; and/or
c) 0.5 - 30% by weight, preferably 1 - 10% by weight, particularly preferred 2 - 5% by weight, of plastic material.

7. Battery according to one of the preceding claims, **characterised in that** the cathode comprises
a) an electrochemically active cathode material comprising sulphur or a lithium-sulphur compound, preferably Li₂S;
b) as electrically conductive carbon material, porous carbon, carbon black, graphene, graphite, diamond-like carbon (DLC), graphite-like carbon (GLC), carbon fibres, carbon nanotubes and/or carbon hollow balls, and/or
c) as fibrillar plastic material, fibrillar polytetrafluoroethylene.

8. Battery according to the preceding claim, **characterised in that**
a) the carbon nanotubes have a diameter of 0.1 to 100 nm, preferably of 1 to 50 nm, particularly preferred of 5 to 25 nm; and/or
b) the carbon fibres have a diameter of 1 to 100 µm, preferably of 5 to 50 µm, particularly preferred of 10 to 20 µm.

9. Battery according to one of the preceding claims, **characterised in that** the cathode is configured as a film, preferably with a thickness of 20-1,000 µm, particularly preferred with a thickness of 5 - 500 µm, in particular with a thickness of 80 - 300 µm and optionally is applied on an electrically conductive substrate, preferably on a metal and/or carbon material.

10. Battery according to one of the preceding claims, **characterised in that** the electrochemically active cathode material is applied at least in regions on the surface of the electrically conductive carbon material or the electrically conductive carbon material is applied on the surface of the active cathode material.

11. Battery according to one of the preceding claims, **characterised in that** the electrolyte is selected from the group consisting of solutions or suspensions of at least one lithium salt in at least one cyclic or non-cyclic ether, polyether and/or sulphone, preferably solutions of
a) lithium-bis(trifluoromethanesulphonyl)imide (LiTFSI);
b) lithium trifluoromethanesulphonate;
c) lithium nitrate; and/or
d) at least one lithium salt and at least one N-O-containing additive;
in at least one cyclic or non-cyclic ether, polyether and/or sulphone, in particular in dimethoxyethane (DME), tetraethyleneglycol dimethyl ether (= TEGDME) and/or 1,3-dioxolane (DOL).

## Revendications

1. Batterie métal alcalin-chalcogène, comprenant
a) une cathode contenant au moins un chalcogène et/ou au moins un composé métal alcalin-chalcogène ;
b) une anode;
c) un électrolyte liquide, un électrolyte en gel et/ou un électrolyte solide contenant un métal alcalin, disposés entre l'anode et la cathode ;
dans laquelle, au moins par zones entre l'anode et la cathode, est disposé un séparateur sélectif de cations, qui est perméable aux ions de métaux alcalins et est imperméable aux ions polychalcogénures Zₙ²⁻, avec n ≥ 2, Z représentant le chalcogène,
le séparateur sélectif de cations contenant entre l'anode et la cathode un substrat poreux, le substrat poreux présentant des pores ayant un diamètre moyen des pores d₅₀ de 1 nm à 5 µm, et les pores du substrat poreux étant en totalité ou en partie imprégnés d'un polymère anionique, et le substrat poreux étant constitué d'un matériau thermoplastique poreux, **caractérisée en ce que** le séparateur sélectif de cations présente une épaisseur de couche de 50 nm à 5 µm.

2. Batterie selon la revendication 1, **caractérisée en ce que** le séparateur sépare l'électrolyte spatialement et complètement en une partie côté anode de l'électrolyte et en une partie côté cathode de l'électrolyte, les deux parties de l'électrolyte n'étant en contact que par l'intermédiaire du séparateur.

3. Batterie selon l'une des revendications précédentes, **caractérisée en ce que** le séparateur sélectif de cations a une configuration planaire, de préférence sous forme d'une membrane planaire.

4. Batterie selon l'une des revendications précédentes, **caractérisée en ce que** le séparateur sélectif de cations contient entre l'anode et la cathode un substrat poreux et bidimensionnel, qui présente des pores ayant un diamètre moyen des pores d₅₀ de 5 nm à 500 nm, d'une manière particulièrement préférée de 10 nm à 200 nm, en particulier de 20 à 100 nm, les pores du substrat étant en totalité ou en partie imprégnés d'un copolymère tétrafluoréthylène-perfluoré anionique, d'une manière particulièrement préférée par un copolymère tétrafluoréthylène-perfluoré contenant des groupes acide sulfonique, en particulier par un copolymère tétrafluoréthylène/acide perfluoro(4-méthyl-3,6-dioxa-7-octane-1-sulfonique).

5. Batterie selon la revendication précédente, **caractérisée en ce que** le substrat contient une polyoléfine, d'une manière particulièrement préférée un polypropylène, un polyéthylène, un poly(téréphtalate d'éthylène), ainsi que des matériaux composites de ceux-ci, ou en est constitué.

6. Batterie selon l'une des revendications précédentes, **caractérisée en ce que** la cathode contient, par rapport au poids total de la cathode,
a) 40 à 90 % en poids, de préférence 50 à 80 % en poids, d'une manière particulièrement préférée 60 à 75 % en poids d'un matériau de cathode électrochimiquement actif ;
b) 1 à 55 % en poids, de préférence 5 à 35 % en poids, d'une manière particulièrement préférée 10 à 25 % en poids, d'un matériau carboné électriquement conducteur ; et/ou
c) 0,5 à 30 % en poids, de préférence 1 à 10 % en poids, d'une manière particulièrement préférée 2 à 5 % en poids, d'un matériau plastique.

7. Batterie selon l'une des revendications précédentes, **caractérisée en ce que** la cathode contient
a) un matériau de cathode électrochimiquement actif, contenant du soufre ou un composé lithium-soufre, de préférence Li₂S ;
b) en tant que matériau carboné électriquement conducteur, du carbone poreux, du noir de carbone, du graphène, du graphite, du carbone sous forme de diamant amorphe (DLC), du carbone sous forme de graphite (GLC), des fibres de carbone, des nanotubes de carbone et/ou des billes creuses de carbone, et/ou
c) en tant que matériau plastique fibrillaire, du polytétrafluoréthylène fibrillaire.

8. Batterie selon la revendication précédente, **caractérisée en ce que**
a) les nanotubes de carbone présentent un diamètre de 0,1 à 100 nm, de préférence de 1 à 50 nm, d'une manière particulièrement préférée de 5 à 25 nm ; et/ou
b) les fibres de carbone présentent un diamètre de 1 à 100 µm, de préférence de 5 à 50 µm, d'une manière particulièrement préférée de 10 à 20 µm.

9. Batterie selon l'une des revendications précédentes, **caractérisée en ce que** la cathode est configurée sous forme d'une feuille, ayant de préférence une épaisseur de 20 à 1000 µm, d'une manière particulièrement préférée une épaisseur de 50 à 500 µm, en particulier une épaisseur de 80 à 300 µm, et en option est appliquée sur un substrat électriquement conducteur, de préférence sur un métal et/ou un matériau carboné.

10. Batterie selon l'une des revendications 7 à 9, **caractérisée en ce que** le matériau de cathode électrochimiquement actif est au moins par zones appliqué sur la surface du matériau carboné électriquement conducteur, ou **en ce que** le matériau carboné électriquement conducteur est appliqué sur la surface du matériau actif de cathode.

11. Batterie selon l'une des revendications précédentes, **caractérisée en ce que** l'électrolyte est choisi dans le groupe consistant en les solutions ou suspensions d'au moins un sel de lithium dans au moins un éther, un polyéther et/ou une sulfone cycliques ou acycliques, de préférence les solutions
a) de bis(trifluorométhanesulfonyl)imidure de lithium (LiTFSI) ;
b) de trifluorométhanesulfonate de lithium ;
c) de nitrate de lithium ; et/ou
d) d'au moins un sel de lithium et d'au moins un additif contenant N-O ;
dans au moins un éther, un polyéther et/ou une sulfone cycliques ou acycliques, en particulier dans le diméthoxyéthane (DME), l'éther diméthylique du tétraéthylèneglycol (= TEGDME) et/ou le 1,3-dioxolanne (DOL).
